# EUROPEAN PATENT APPLICATION

(11) **EP 4 832 102 A1**
(43) Date of publication of application: **28.10.2026**
(21) Application number: 24905953.6
(22) Date of filing: 18.11.2024
(51) Int. Cl.: H01M 4/525, H01M 4/505, H01M 4/62, H01M 10/0525

(54) **LITHIUM-ION BATTERY POSITIVE ELECTRODE MATERIAL, AND PREPARATION METHOD THEREFOR AND USE THEREOF**

(30) Priority: 19.12.2023 CN 202311743899
(71) Applicant: Hunan Changyuan Lico New Energy Co., Ltd., Changsha, Hunan 410205 (CN)
(72) Inventor: GUO, Xin, Changsha, Hunan 410205 (CN); WANG, Ke, Changsha, Hunan 410205 (CN); HU, Haishi, Changsha, Hunan 410205 (CN); LIU, Kai, Changsha, Hunan 410205 (CN); LI, Hechen, Changsha, Hunan 410205 (CN); LI, Min, Changsha, Hunan 410205 (CN); ZHU, Jian, Changsha, Hunan 410205 (CN)
(74) Representative: Zoli, Filippo
(86) International application number: PCT/CN2024/132730
(87) International publication number: WO 2025/130468

(57) **Abstract**

A lithium-ion battery positive electrode material, and a preparation method therefor and a use thereof, relating to the technical field of new energy. The lithium-ion battery positive electrode material comprises a lithium layered metal oxide, a perovskite layer and a fast ionic conductor layer from the center to the surface, and the chemical formula of the perovskite layer comprises M'(Ni_{x'}Co_{y'}Mn_{z'})O₃. The designed structure can effectively improve the ionic conductivity and the electronic conductivity of the lithium-ion battery positive electrode material, further reduces the impedance of the lithium-ion battery positive electrode material, provides a wrapping protection effect, and improves the overall cycle performance and rate capability of the lithium-ion battery positive electrode material. Also provided are a preparation method for the lithium-ion battery positive electrode material and a use of the lithium-ion battery positive electrode material.

## Description

### TECHNICAL FIELD

The present disclosure relates to the technical field of new energies, and in particular, to a cathode material of lithium-ion battery, a preparation method therefor and use thereof.

### BACKGROUND

With the rapid development of new energy vehicles, there is a growing demand for high-energy-density lithium-ion batteries in the field. A cathode material is a key factor that determines the energy density of the lithium-ion batteries. Currently, the commercially used cathode materials of lithium-ion batteries primarily comprise lithium cobalt oxide, lithium iron phosphate, a ternary materials, etc. Among them, the lithium cobalt oxide has a relatively high cost; the lithium iron phosphate has a low specific capacity; the ternary material, namely a lithium nickel cobalt manganese (NCM) ternary cathode material, has been widely used in power lithium batteries due to its advantages such as controllable cost, high energy density, good cycle performance and long cycle life.

To further improve the energy density of the ternary material, it is necessary to attempt to increase the content of nickel, which may lead to an increase in lithium/nickel mixing ratio, thereby reducing the electrochemical performance of the ternary material. To further improve the rate performance of the ternary material, it is necessary to attempt to increase the specific surface area of the ternary material, but this will reduce the cycling performance of the material.

In summary, the traditional ternary cathode material cannot simultaneously achieve optimal energy density, rate performance and cycle performance.

### SUMMARY

The present disclosure aims to solve at least one of the technical problems existing in the existing technology. Therefore, the present disclosure proposes a cathode material of lithium-ion battery that can effectively improve the ionic conductivity and electronic conductivity of the cathode material of lithium-ion battery, thereby reducing its impedance. Also provided is an encapsulation protection effect, thereby improving the overall cycle performance and rate performance of the obtained cathode material of lithium-ion battery.

The present disclosure further provides a preparation method for the cathode material of lithium-ion battery.

The present disclosure further provides a lithium-ion secondary battery comprising the cathode material of lithium-ion battery.

In accordance with an embodiment of a first aspect of the present disclosure, provided is a cathode material of lithium-ion battery, which has a chemical formula of LiₐNiₓCo_{y}Mn_{z}M_{w}O_{2±b}, wherein 1.03≤a≤1.3, 0.3≤x≤1, preferably 0.3≤x≤0.8, 0≤y≤0.4, 0≤z≤0.4, 0≤w≤0.1, x+y+z+w=1, 0≤b≤0.1; and M is at least one selected from the group consisting of La, Al, Ca, Ti, Zr, W, Sr, B, Nb and Ba, preferably at least one selected from the group consisting of La, Al, Ti, Zr, W, Sr, B and Nb.

The cathode material of lithium-ion battery comprises, from a center to a surface, a layered lithium metal oxide, a perovskite layer and a fast ion conductor layer; and the perovskite layer comprises a chemical formula of M'(Ni_{x'}Co_{y'}Mn_{z'})O₃, preferably, the perovskite layer comprises a perovskite material and comprises a chemical formula of M'(Ni_{x'}Co_{y'}Mn_{z'})O₃, where 0.3≤x'≤1, 0≤y'≤0.4, 0≤z'≤0.4, x'+y'+z'=1, and M' is at least one selected from the group consisting of La, Sr, Ca and Ti.

In accordance with some embodiments of the present disclosure, in the chemical formula M'(Ni_{x'}Co_{y'}Mn_{z'})O₃ of the perovskite layer and the chemical formula LiₐNiₓCo_{y}Mn_{z}M_{w}O_{2±b} of the cathode material of lithium-ion battery, M and M', x and x', y and y', or z and z' may be the same or different.

In accordance with an embodiment of the first aspect of the present disclosure, further provided is a cathode material of lithium-ion battery, wherein,
the cathode material of lithium-ion battery has a double-layer core-shell structure, which comprises a layered lithium metal oxide (a core), a perovskite layer and a fast ion conductor layer from the center to the surface;
the layered lithium metal oxide has a chemical formula of LiₐNiₓCo_{y}Mn_{z}M_{w}O_{2±b}, where 1.03≤a≤1.3, 0.3≤x≤1, preferably 0.3≤x≤0.8, 0≤y≤0.4, 0≤z≤0.4, 0≤w≤0.1, preferably 0.02≤w≤0.06, x+y+z+w=1, 0≤b≤0.1; and M is at least one selected from the group consisting of Zr, W, Ti, Al, B, Nb, Ba, and Ca, preferably at least one selected from the group consisting of Zr, W, Ti, Al, B, and Nb;
the perovskite layer comprises a perovskite material with a chemical formula of M'(Ni_{x'}Co_{y'}Mn_{z'})O₃, where 0.3≤x'≤1, preferably 0.3≤x'≤0.8, 0≤y'≤0.4, 0≤z'≤0.4, x'+y'+z'=1, and M' is at least one selected from the group consisting of La, Sr, Ca, and Ti, preferably at least one of La and Sr.

In accordance with an embodiment of the first aspect of the present disclosure, further provided is a cathode material of lithium-ion battery, wherein, the fast ion conductor layer comprises a LiMO-type fast ion conductor material, and M is at least one selected from the group consisting of Zr, W, Ti, Al, B, Nb, Ba and Ca, preferably at least one selected from the group consisting of Zr, W, Ti, Al, B and Nb.

In accordance with an embodiment of the present disclosure, the cathode material of lithium-ion battery at least has the following beneficial effects.

In the cathode material of lithium-ion battery provided in the present disclosure, the perovskite layer comprises an ABO3-type perovskite material, but it is not limited to comprise the ABO3-type perovskite material only, and may also comprise a layered lithium metal oxide. In the ABO3-type perovskite material, M', Ni, Co, and Mn can all be partially replaced by other metal ions with similar radii, while maintaining its crystal structure essentially unchanged. The ABO3-type perovskite material does not have strict limitations on the valence of the metallic elements therein, comprising divalent, trivalent, tetravalent and the like. The perovskite material is a semiconductor material with relatively high electronic conductivity, which can effectively improve the conductivity of the cathode material of lithium-ion battery and reduce the impedance. That is to say, the perovskite layer can significantly improve electronic conductivity, and the fast ion conductor layer can significantly improve ionic conductivity. Through their combined effect, the impedance performance of the cathode material of lithium-ion battery can be significantly reduced.

In the cathode material of lithium-ion battery provided in the present disclosure, the perovskite layer and the fast ion conductor layer are arranged on a surface of the layered lithium metal oxide (the core), which is equivalent to the double-layer core-shell structure. This can protect the cathode material from being easily corroded by electrolyte to a certain extent, and improve cycling stability and the like.

As can be seen from the above chemical formula, the cathode material of lithium-ion battery provided in the present disclosure is obtained by adjusting an NCM ternary cathode material as a matrix, which has the advantages of low cost and high energy density of the NCM ternary cathode material.

In accordance with some embodiments of the present disclosure, the cathode material of lithium-ion battery has a pore structure; preferably, at least a portion of the pore structure is a through hole.

Due to the presence of the pore structure, the cathode material of lithium-ion battery has a loose structure; and the through hole can directly reach the interior of each cathode material particle of lithium-ion battery. Such structural design can improve the wettability of the electrolyte toward the cathode material of lithium-ion battery, thereby improving its rate performance.

In accordance with some embodiments of the present disclosure, the cathode material of lithium-ion battery has an oil adsorption of 20-60 mL/100 g. Within the above-mentioned oil adsorption range, the cathode material of lithium-ion battery exhibits moderate porosity, a proper contact area with the electrolyte, favorable wettability and high rate performance; furthermore, since side reactions that occur upon contact with the electrolyte are also within a controllable range, cycling stability and the like will not be compromised.

In accordance with some embodiments of the present disclosure, the cathode material of lithium-ion battery has an oil adsorption of 20-60 mL/100 g, preferably 40-55 mL/100 g. For example, it may be approximately 45 mL/100 g, 50 mL/100 g, 52 mL/100 g or 53 mlL/100 g.

In accordance with some embodiments of the present disclosure, the cathode material of lithium-ion battery has a lithium site occupancy of ≥95%. The lithium site occupancy reflects the mixing degree of lithium/nickel to some extent, and further indicates the microscopic ordering in the cathode material of lithium-ion battery, thereby ultimately affecting the impedance of the obtained cathode material of lithium-ion battery. Specifically, when the lithium site occupancy is within the above range, the cathode material of lithium-ion battery has relatively low impedance, especially relatively low low-temperature impedance.

In accordance with some embodiments of the present disclosure, the cathode material of lithium-ion battery has a lithium site occupancy of ≥97%. For example, it may be approximately 98%, 98.1%, 98.2% or 98.5%. The cathode material of lithium-ion battery has a lithium site occupancy of, for example, 95%-99%, preferably 97%-98.5%.

In accordance with some embodiments of the present disclosure, the cathode material of lithium-ion battery has a Span value between 0.4 and 1.4; and Span = (D₉₀ - D₁₀)/D₅₀. A lower Span value indicates that the particle size uniformity of the cathode material of lithium-ion battery is higher, and the preparation difficulty is larger. A higher Span value indicates that the particle size of the cathode material of lithium-ion battery is more dispersed, and the viscosity of the slurry during the subsequent slurry homogenization process is higher. Within the above range, the Span value does not significantly increase the difficulty of the preparation method, thus improving the industrial applicability of the cathode material of lithium-ion battery.

In accordance with some embodiments of the present disclosure, a D50 value of the cathode material of lithium-ion battery is from 2.5 µm-15 µm, preferably 2.5 µm-11 µm, further preferably 3.0 µm-6.0 µm, for example, specifically 3.0 µm-5.0 µm, further specifically approximately 3.8 µm.

In accordance with some embodiments of the present disclosure, a crystallite size of the cathode material of lithium-ion battery is between 400 Å and 800 Å. A too small crystallite size indicates that the crystal structure has not grown completely, the crystallinity is poor, and the crystals possess many defects, which will affect the initial properties of the material. In contrast, a too large crystallite size indicates that the crystal is prone to deformation, resulting in poor structural stability. When the crystallite size is within the above range, the obtained cathode material of lithium-ion battery has a complete structure and high stability.

In accordance with some embodiments of the present disclosure, an impedance value of the cathode material of lithium-ion battery at -30°C is ≤330 Ω. For example, the impedance value may be approximately 250 Ω, 280 Ω, 300 Ω, 310 Ω or 320 Ω.

In accordance with some embodiments of the present disclosure, in the chemical formula of LiₐNiₓCo_{y}Mn_{z}M_{w}O_{2±b}, 1.03≤a≤1.3, preferably 1.08≤a≤1.25, for example, specifically, 1.1≤a≤1.2, further specifically, approximately 1.15.

In accordance with some embodiments of the present disclosure, in the chemical formula of LiₐNiₓCo_{y}Mn_{z}M_{w}O_{2±b}, 0.3≤x≤1, preferably 0.3≤x≤0.92, more preferably 0.3≤x≤0.8, further preferably 0.5≤x≤0.7. For example, x may be 0.3, 0.33, 0.4, 0.5, 0.6, 0.7 or 0.8.

In accordance with some embodiments of the present disclosure, in the chemical formula of LiₐNiₓCo_{y}Mn_{z}M_{w}O_{2±b}, 0≤y≤0.4, preferably 0≤y≤0.3, specifically, 0.1≤y≤0.2, more specifically, 0.15≤y≤0.2. Further more specifically, y is approximately 0.18 or 0.19.

In accordance with some embodiments of the present disclosure, in the chemical formula of LiₐNiₓCo_{y}Mn_{z}M_{w}O_{2±b}, 0≤z≤0.4, preferably 0≤z≤0.3, specifically, 0.2≤z≤0.3, more specifically 0.25≤z≤0.3. Further more specifically, z is approximately 0.27, 0.28 or 0.29.

In accordance with some embodiments of the present disclosure, in the chemical formula of LiₐNiₓCo_{y}Mn_{z}M_{w}O_{2±b}, 0≤w≤0.1, preferably 0.01≤w≤0.08, more preferably 0.02≤w≤0.06. Further specifically, w is approximately 0.01, 0.015, 0.02, 0.03, 0.04, 0.05, 0.06, 0.07 or 0.08.

In accordance with some embodiments of the present disclosure, in the chemical formula of LiₐNiₓCo_{y}Mn_{z}M_{w}O_{2±b}, 0≤b≤0.11, preferably 0≤b≤0.1, more preferably 0.01≤b≤0.105, further preferably 0.085≤b≤0.105.

In accordance with some embodiments of the present disclosure, in the chemical formula of LiₐNiₓCo_{y}Mn_{z}M_{w}O_{2±b}, M comprises a combination of Zr, W and Ti, a combination of Zr, Al and W, and a combination of Nb and B.

In accordance with some embodiments of the present disclosure, the layered lithium metal oxide comprises a ternary cathode material or a doped ternary cathode material.

In accordance with an embodiment of a second aspect of the present disclosure, provided is a method for preparing the cathode material of lithium-ion battery, comprising the following steps:
S1, depositing M'-doped NiₓCo_{y}Mn_{z}(OH)₂ on a surface of NiₓCo_{y}Mn_{z}(OH)₂ with a co-precipitation method to obtain a precursor;
S2, pre-sintering the precursor in an aerobic atmosphere at a temperature of 300°C-700°C to obtain a pre-sintered product; and
S3, mixing the pre-sintered product obtained in step S2, a lithium source and an M-containing dopant source to obtain a mixture; and calcining the mixture in an aerobic atmosphere, and then cooling to obtain the cathode material of lithium-ion battery;
wherein the calcination is carried out at a temperature of 700°C-1000°C; and the cooling involves a cooling platform having a temperature of 300°C-600°C.

The mechanism of the preparation method is as follows:
Step S1 is a precursor synthesis step, comprising a nucleation and core growth stage and a shell growth stage. A doping element M' for preparing perovskite is added with a co-precipitation method at the end of the shell growth stage to deposit M'-doped NiₓCo_{y}Mn_{z}(OH)₂ on the surface of NiₓCo_{y}Mn_{z}(OH)₂ to obtain the precursor.

In step S2, for the M'-doped NiₓCo_{y}Mn_{z}(OH)₂ on the surface, after the pre-sintering in step S2, M' reacts with adjacent NiₓCo_{y}Mn_{z}(OH)₂ to form a perovskite layer comprising M'(Ni_{x'}Co_{y'}Mn_{z'})O₃. The perovskite layer has a stable structure and is not decomposed at the calcination temperature in step S3; furthermore, since its metallic element has a high valence state, the calcination in step S3 is preferably carried out in an aerobic environment. Therefore, in step S3, M'(Ni_{x'}Co_{y'}Mn_{z'})O₃ remains unchanged and does not react with a lithium source.

In step S2, the precursor is pre-sintered in an aerobic atmosphere at a temperature of 300°C-700°C, such that the transition metal hydroxide precursor NiₓCo_{y}Mn_{z}(OH)₂ generates corresponding transition metal oxides.

If the pre-sintering temperature in step S2 is too low, it will not be able to promote the formation of the corresponding perovskite from the M'-doped NiₓCo_{y}Mn_{z}(OH)₂. If the pre-sintering temperature in step S2 is too high, it will cause the precursor to undergo excessive oxidation. The pre-sintered product obtained within the pre-sintering temperature range has a complete crystal structure and excellent electrochemical performance.

In step S3, the pre-sintered product obtained in step S2, the lithium source and the M-containing dopant source are mixed, calcined in an aerobic atmosphere and cooled to obtain the cathode material of lithium-ion battery. The calcination is carried out at a temperature of 700°C-1000°C; the cooling involves a cooling platform having a temperature of 300°C-600°C.

Most of the lithium source reacts with the transition metal oxide to generate the layered lithium metal oxide. Meanwhile, most of the M element mixed in step S3 passes through the perovskite layer to enter layered lithium metal oxide lattices as a dopant. The remaining lithium source reacts with the remaining M-containing dopant source to generate a LiMO-type fast ion conductor layer comprising the LiMO-type fast ion conductor material. For example, when the M element mixed in step S3 comprises an aluminum element, the fast ion conductor comprises LiAlO₂. For example, when M comprises a tungsten element, the fast ion conductor may comprise Li₂WO₄ or Li₄WO₅. For example, when M comprises multiple elements, the fast ion conductor is a complex of lithium oxides of multiple elements.

In step S3, if the calcination temperature is too low, the reaction will be incomplete, and a high level of free lithium will remain on the surface, affecting the processing performance and electrical performance of the obtained cathode material of lithium-ion battery. If the calcination temperature is too high, the degree of crystallization will be too high and the grain diameter will be too large, which is not conducive to the intercalation and de-intercalation of lithium ions and will affect the impedance of the material. Within the calcination temperature range, the cathode material of lithium-ion battery with excellent processing and electrochemical properties can be obtained.

Since a portion of the fast ion conductor material generated in step S3 decomposes at a high temperature, a cooling platform is introduced after high-temperature calcination, such that the decomposed fast ion conductor material can be regenerated at a low-temperature cooling platform stage. Meanwhile, during the high-temperature calcination stage, a portion of doping element M can be doped in the cathode material of lithium-ion battery; in such the way, the calcination can not only take the effect of element doping but also plays a role in coating the fast ion conductor. Compared with the conventional calcination method for directly cooling to room temperature after maintaining at a high temperature, the production process provided in the present disclosure is simpler and easier to operate, and can adjust the microstructure of the obtained cathode material of lithium-ion battery.

In step S3, if the temperature of the cooling platform is too high, it cannot promote the regeneration of the fast ion conductor; if the temperature is too low, it will not function as the cooling platform. Within the temperature range of the cooling platform, good coating can be formed, and the low-temperature impedance of the obtained cathode material of lithium-ion battery can be significantly reduced.

In accordance with some embodiments of the present disclosure, the method for preparing the cathode material of lithium-ion battery is the method for preparing the cathode material of lithium-ion battery comprising the layered lithium metal oxide, the perovskite layer and the fast ion conductor layer.

In accordance with according to the embodiments of the present disclosure, the preparation method at least has the following beneficial effects.

In the preparation method provided in the present disclosure, the elemental composition of each stage in the synthesis step of the precursor is precisely controlled. Moreover, the pre-sintering, calcination and cooling platforms are carefully provided, and specific temperature parameters are determined. Furthermore, the layered structure and coating structure of the material are precisely controlled. In accordance with the lithium/metal ratio in the chemical formula of the cathode material of lithium-ion battery, the amount of the lithium source added in step S3 is adjusted to ensure the completion of the lithiation reaction, and increase the lithium site occupancy in the obtained cathode material of lithium-ion battery while ensuring the formation of the perovskite layer and the surface fast ion conductor layer, thereby ultimately significantly reducing the low-temperature impedance of the obtained cathode material of lithium-ion battery, improving the cycle performance such as capacity retention, and achieving unexpected technical results.

In accordance with some embodiments of the present disclosure, in step S1, when a particle size of NiₓCo_{y}Mn_{z}(OH)₂ is 90%-99% of that of the precursor, the deposition of the M'-doped NiₓCo_{y}Mn_{z}(OH)₂ is initiated. During the continuous production, the particle size of a semi-finished product changes continuously. Therefore, it is acceptable to initiate the doping of the element M within the expected particle size range of 90%-99%, which have no significant effect on the performance of the obtained cathode material of lithium-ion battery.

In accordance with some embodiments of the present disclosure, the step S1 for precursor synthesis specifically comprises the following sub-steps:
S1a, concurrently feeding a metal salt solution and an alkaline solution into a base solution for reaction to achieve nucleation and core growth;
S1b, concurrently feeding the metal salt solution, the alkaline solution and ammonia water into a resulting mixed solution obtained in step S1a for further reaction to achieve shell growth;
wherein, in the later stage of the shell growth, when the shell grows to 90%-99% of the particle size of the precursor, a metal salt solution containing element M' (a M' soluble salt solution) is added to dope the element M' on a surface of a precursor particle; and
S1c, subjecting a mixture obtained in step S1b to solid-liquid separation, aging, washing and drying to obtain the precursor.

In accordance with some embodiments of the present disclosure, in step S1a, the base solution is a dilute alkaline solution, and a pH value of the base solution is 11-14; for example, the pH value of the base solution is approximately 12.

In accordance with some embodiments of the present disclosure, in step S1a, the metal salt solution comprises a nickel salt, a cobalt salt and a manganese salt. A ratio of the nickel salt to the manganese salt to the cobalt salt is determined according to the range of subscript parameters in LiₐNiₓCo_{y}Mn_{z}M_{w}O_{2±b} described above.

In accordance with some embodiments of the present disclosure, in step S1a, a total concentration of the metal salt solution is 1.5 mol/L-2.5 mol/L. For example, the total concentration of the metal salt solution may be approximately 2 mol/L. Unless otherwise specified, the concentration of the metal salt solution is the concentration of transition metal ions.

In accordance with some embodiments of the present disclosure, in step S1a, a concentration of the alkaline solution is 2 mol/L-12 mol/L, preferably 3 mol/L-6 mol/L. For example, the concentration of the alkaline solution may be approximately 4 mol/L or 5 mol/L.

In accordance with some embodiments of the present disclosure, in step S1a, a solute of the alkaline solution comprises at least one selected from the group consisting of sodium hydroxide, potassium hydroxide, and lithium hydroxide. For example, the solute of the alkaline solution may be sodium hydroxide.

In accordance with some embodiments of the present disclosure, in step S1b, a concentration of the ammonia water is 3 mol/L-20 mol/L, preferably 4 mol/L-10 mol/L, more preferably 4 mol/L-6 mol/L. For example, the concentration of the ammonia water may be approximately 5 mol/L or 6 mol/L.

In accordance with some embodiments of the present disclosure, during the further reaction in step S1b, an ammonium concentration in the system is 5 g/L-20 g/L, preferably 10 g/L-18 g/L. For example, the ammonium concentration in the system may be approximately 10 g/L, 15 g/L or 18 g/L.

In accordance with some embodiments of the present disclosure, in step S1a, the particle size grown during the nucleation and core growth stages is 0.5 µm-8.0 µm, preferably 0.5 µm-3.0 µm. Specifically, the particle size may be 0.8 µm-1.2 µm. Further specifically, the particle size may be approximately 0.8 µm, 0.9 µm, 1.0 µm, 1.1 µm or 1.2 µm.

In accordance with some embodiments of the present disclosure, in steps S1a and S1b, the pH values of the reaction and the further reaction are each independently 9.5 to 13. For example, the pH values may be approximately 9.5, 10, 10.5, 11, 11.5, 12, 12.5 or 13.

In accordance with some embodiments of the present disclosure, in steps S1a and S1b, the temperatures of the reaction and the further reaction are each independently 30°C to 60°C. For example, the temperatures of the reaction and the further reaction may be approximately 45°C.

In accordance with some embodiments of the present disclosure, in steps S1a and S1b, the reaction and the further reaction are each independently carried out at a stirring speed of300 rpm to 1000 rpm. For example, the reaction and the further reaction may be carried out at a stirring speed of approximately 600 rpm.

In accordance with some embodiments of the present disclosure, in steps S1a and S1b, the reaction and the further reaction are carried out in a protective atmosphere. The protective atmosphere comprises at least one of nitrogen and argon. For example, the protective atmosphere may be nitrogen.

In accordance with some embodiments of the present disclosure, in step S1, a deposition method of the M'-doped NiₓCo_{y}Mn_{z}(OH)₂ comprises: concurrently feeding the metal salt solution, the M' soluble salt solution, the alkaline solution and the ammonia water into an aqueous dispersion containing a precursor core, wherein the parameter control is the same as that in step S1b.

In accordance with some embodiments of the present disclosure, the metal salt solution is mixed with the M' soluble salt solution to obtain a mixed metal salt solution.

In accordance with some embodiments of the present disclosure, the M' soluble salt comprises at least one of sulfate, nitrate and acetate of M'.

In accordance with some embodiments of the present disclosure, in step S1, the particle size of the precursor is 2.5 µm-15 µm, preferably 2.5 µm-11 µm, further preferably 3.0 µm-6.0 µm. For example, the particle size of the precursor may be approximately 3.0 µm, 3.5 µm, 3.6 µm, 3.7 µm, 3.8 µm, 3.9 µm, 4.0 µm, 4.1 µm, 4.2 µm, 4.3 µm, 4.4 µm, 4.5 µm, 5.0 µm or 6.0 µm.

In accordance with some embodiments of the present disclosure, in step S2, the pre-sintering is carried out at a temperature of 300°C-700°C, preferably 350°C-650°C. Specifically, the pre-sintering may be carried out at a temperature of 400°C-600°C. Further specifically, pre-sintering may be carried out at a temperature of approximately 500°C.

In accordance with some embodiments of the present disclosure, in step S2, the pre-sintering is carried out for 2 h-8 h. For example, the pre-sintering may be carried out for 3 h-7 h. Further specifically, the pre-sintering time may be carried out for approximately 5 h.

In accordance with some embodiments of the present disclosure, a molar ratio of M' in step S1 to M in step S3 is 1:0.5-10, preferably 1:1-5.

In accordance with some embodiments of the present disclosure, a molar percentage of the doping element M' added in step S1 relative to the elements (Ni, Co, Mn, M') in the precursor is 0.01 mol%-3.0 mol%, preferably 0.01 mol%-2.0 mol%, more preferably 0.05 mol%-1.5 mol%, further preferably 0.5 mol%-1.5 mol%. For example, the molar percentage of the doping element M' added in step S1 relative to the elements (Ni, Co, Mn, M') in the precursor may be 0.1 mol%, 0.3 mol%, 0.5 mol%, 0.6 mol%, 0.7 mol%, 0.8 mol%, 0.9 mol%, 1.0 mol%, 1.1 mol%, 1.2 mol%, 1.3 mol%, 1.4 mol%, 1.5 mol%, 1.6 mol%, 1.8 mol%, or 2.0 mol%.

In fact, in steps S1 and S3, the molar percentage of M' refers to a molar ratio of M' relative to a total molar of Ni, Co, Mn and M' in the obtained cathode material of lithium-ion battery, and the molar percentage of M refers to a molar ratio of M relative to a total molar of Ni, Co, Mn and M in the obtained cathode material of lithium-ion battery. However, since the variation in the total content of metallic elements (excluding lithium) between the precursor and the cathode material is extremely small and thus negligible when used as the denominator, they can be regarded as equivalent. For ease of calculation, in step S1, the total amount of metallic elements in the precursor may also be used as the denominator for calculation.

In accordance with some embodiments of the present disclosure, a molar amount of the doping element M added in step S3 is 0.1%-10%, preferably 0.1%-8%, more preferably 1%-8%, more preferably 2%-6%, of a total molar amount of the elements (Ni, Co, Mn, M') in the pre-sintered product. For example, , the percentage may be 0.1%, 0.2%, 0.5%, 0.8%, 1.0%, 1.5%, 1.8%, 2.0%, 2.1%, 2.5%, 3.0%, 4.0%, 5.0%, 6.0%, 7.0% or 8.0%.

The M' in step S1 and the M in step S3 may be the same or different, and are each independently at least one selected from the group consisting of Zr, W, Ti, Al, B, Nb, Ba and Ca.

In accordance with some embodiments of the present disclosure, the M' in step S1 is at least one selected from the group consisting of La, Sr, Ca, and Ti, and preferably at least one of La and Sr.

In accordance with some embodiments of the present disclosure, the M in step S3 is at least one selected from the group consisting of Zr, W, Ti, Al, B, Nb, Ba, and Ca, preferably at least one selected from the group consisting of Zr, W, Ti, Al, B, and Nb. For example, the M can be a combination of Zr and W, a combination of W and Ti, a combination of Zr and B, a combination of Al and B, a combination of Nb and B, a combination of Zr and Ti, a combination of Zr, W and Nb, a combination of Zr, Al and W, or a combination of Zr, W and Ti. For example, when multiple elements are mixed, there are no special requirements for the mixing ratio, as long as the total amount is satisfied. For example, the multiple elements may be mixed in an equal proportion or an unequal proportion.

In accordance with some embodiments of the present disclosure, in step S3, the M-containing dopant source comprises an oxide of M. For example, when M comprises Zr, W and Ti, the M-containing dopant source comprises ZrO₂, WO₃ and TiO₂.

In accordance with some embodiments of the present disclosure, in step S3, an addition amount of the lithium source is determined based on a proportion of the chemical formula LiₐNiₓCo_{y}Mn_{z}M_{w}O_{2±b}. For example, a molar ratio of metals (including Ni, Co and Mn) to lithium is 1:1.03-1.3, preferably 1:1.08-1.25; further preferably, approximately 1:1.15. The lithium source comprises at least one of lithium hydroxide and lithium carbonate.

In accordance with some embodiments of the present disclosure, in step S3, the calcination is carried out at an atmosphere of dry air or dry oxygen.

In accordance with some embodiments of the present disclosure, in step S3, the calcination is carried out at a temperature of 700°C-1000°C, preferably 800°C-900°C. For example, the calcination may be carried out at a temperature of approximately 840°C or approximately 850°C. As long as excellent lithiation reaction effect and doping effect can be achieved, there is no particular limitation for the calcination temperature.

In accordance with some embodiments of the present disclosure, in step S3, the calcination is carried out for 4 h-24 h. For example, the calcination may be carried out for 8 h-12 h. More specifically, the calcination may be carried out for approximately 10 h. As long as excellent lithiation and doping effects can be achieved, there are no particular limitations for the calcination time.

In accordance with some embodiments of the present disclosure, in step S3, the temperature of the cooling platform is 300°C-600°C, preferably 400°C-590°C, more preferably 450°C-580°C. For example, the temperature of the cooling platform is approximately 450°C, 500°C, 550°C or 580°C.

In accordance with some embodiments of the present disclosure, in step S3, a cooling duration of the cooling platform is 1 h-7 h. For example, specifically, the cooling duration of the cooling platform may be 4 h to 6 h. More specifically, the cooling duration of the cooling platform may be approximately 5 h.

In accordance with an embodiment of a third aspect of the present disclosure, provided is a lithium-ion secondary battery, wherein raw materials for preparing the lithium-ion secondary battery comprise the cathode material of lithium-ion battery.

Since the lithium-ion secondary battery comprises the cathode material of lithium-ion battery as described in all the technical solutions of the above embodiments, it at least has all the beneficial effects brought by the technical solutions of the above embodiments. That is, the rate performance and cycle performance of the lithium-ion secondary battery are both superior.

In accordance with some embodiments of the present disclosure, the lithium-ion secondary battery can be used to manufacture hybrid electric vehicles (HEVs). The obtained HEVs may be used in low-temperature regions.

Unless otherwise specified, the chemical formula provided in the present disclosure is calculated based on a feeding ratio. In reality, considering factors such as lithium source burn-off, the atomic ratio in the actual cathode material of lithium-ion battery may not be exactly the same as the ratio in the chemical formula, but it still falls within the protection scope of the present disclosure.

Unless otherwise specified, the term "approximately" used herein actually means that the allowable error is within ±2%, for example, approximately 100 is actually 100 ± 2% × 100.

Unless otherwise specified, the term "between...and..." used herein includes endpoints. For example, the term "between 2 and 3" includes the endpoint values of 2 and 3.

Other features and advantages of the present disclosure will be set forth in the following description, and will be apparent in part from the description, or may be learned by practicing the present disclosure.

### BRIEF DESCRIPTION OF DRAWINGS

The above and/or additional aspects and advantages of the present disclosure will become apparent and readily understood from the description of the embodiments taken in conjunction with the following drawings, in which:
FIG.1 is a cross-sectional scanning electron microscopy (SEM) image of the cathode material of lithium-ion battery obtained in Example 1 according to the present disclosure.
FIG.2 is an X-ray powder diffraction (XRD) pattern of the cathode material of lithium-ion battery obtained in Example 1 according to the present disclosure.

### DETAILED DESCRIPTION

The following will describe the concept and technical effects of the present disclosure clearly and completely with reference to the embodiments, so as to fully understand the purpose, features and effects of the present disclosure. Obviously, the described embodiments are only some embodiments of the present disclosure, and not all embodiments. Other embodiments obtained by those skilled in the art based on the embodiments of the present disclosure without creative effort are all within the scope of protection of the present disclosure.

In the description of the present disclosure, the reference terms "one embodiment", "some embodiments", "illustrative embodiment", "example", "specific example", "some examples" and the like refer to specific features, structures, materials, or characteristics described in connection with that embodiment or example are included in at least one embodiment or example of the present disclosure. In this specification, the illustrative expressions of the terms used above do not necessarily refer to the same embodiments or examples. Furthermore, the specific features, structures, materials, or characteristics described may be combined in any suitable manner in one or more embodiments or examples.

### Example 1

In this example, a cathode material of lithium-ion battery was prepared. Specific steps were as follows.

### S1. Synthesis of precursor:

S1a. In a reactor, pure water was used as a base solution, and a pH value of the base solution in the reactor was adjusted to 12.0 using a sodium hydroxide solution. Then, a metal salt solution and the sodium hydroxide solution were introduced into the reactor via a metering pump for reaction. During the reaction, the reaction temperature was 45°C, the stirring speed was maintained at 600 r/min, the pH was controlled at approximately 11, and nitrogen was continuously introduced into the reactor. Ammonia water was not introduced in nucleation and core growth stages, such that the particle size of the material grew to 1.0 µm.

S1b. The reaction conditions of step S1a were maintained. An ammonia water was concurrently introduced on the basis of maintaining the continuous and concurrent feeding of the metal salt solution and the sodium hydroxide solution to adjust the ammonium concentration in the system to 15 g/L, and then the reaction continued to allow shell growth until the D50 particle size reached 3.8 µm (i.e., in the later stage of shell growth, the D50 particle size reached 90%-99% of the expected precursor particle size in this step), the above metal salt solution was replaced with a mixed metal salt solution of the metal salt solution and lanthanum sulfate (CAS No.: 10099-60-2), and other conditions unchanged, such that lanthanum (La)-doped Ni_{0.5}Co_{0.2}Mn_{0.3}(OH)₂ grew on the surface, and the molar amount of lanthanum accounted for 0.5 mol% of the molar amount of the precursor elements (including Ni, Co, Mn and M') obtained in this step.

S1c. The mixture obtained in step S1b was subjected to solid-liquid separation, aging, washing and drying so as to obtain the precursor. The D50 particle size of the obtained precursor was approximately 4.0 µm.

In the metal salt solution of step S1, a molar ratio of nickel to cobalt to manganese was 5:2:3, and a total concentration of nickel, cobalt and manganese was 2 mol/L; a concentration of the sodium hydroxide solution was 4 mol/L; and a concentration of the ammonia water was 5 mol/L.

S2. The precursor synthesized in step S1 was pre-sintered at 500°C for 5 h and then naturally cooled, wherein the pre-sintering was carried out at an atmosphere of air.

S3. The pre-sintered product obtained in step S2, an oxide of doping element M and lithium carbonate as a lithium salt were mixed evenly, wherein the lithium salt was added based on a lithium/metal ratio (i.e., a molar ratio of Li to a total molar of Ni, Co and Mn) of 1.15, the doping element M comprised Zr, W and Ti, the three elements were mixed in a molar ratio of 1:1:1, the total molar amount of the three elements as doping element M accounted for 2 mol% of the total molar amount of the elements (Ni, Co, Mn and M) in the obtained cathode material, the oxide of Zr was ZrO₂, the oxide of W was WO₃, and the oxide of Ti was TiO₂. The above mixture was sintered at 840°C for 10 h, then cooled to 450°C for sintering for 5 h. After cooling, the sintered product was sieved to obtain a cathode material of lithium-ion battery with a D50 particle size of 3.8 µm.

The chemical formula of the layered lithium metal oxide calculated based on the feed ratio is Li_{1.15}(Ni_{0.5}Co_{0.2}Mn_{0.3})_{0.98}M_{0.02}O_{2.085}, wherein in M, a molar ratio of Zr to W to Ti is 1:1:1. The cathode material of lithium-ion battery has a double-layer shell structure. The first-layer shell is a perovskite layer containing La(Ni_{0.5}Co_{0.2}Mn_{0.3})O₃, and the second-layer shell (the outermost layer) is a fast ion conductor layer containing lithium zirconate, lithium tungstate and lithium titanate.

### Example 2

A cathode material of lithium-ion battery was prepared based on Example 1. The specific steps differed from those in Example 1 in that:
(1) in step S1b, the molar amount of lanthanum (La) accounted for the precursor elements (including Ni, Co, Mn and M') obtained in this step was adjusted from 0.5 mol% to 1.5 mol%;
(2) in step S3, the molar amount of the doping element M was adjusted from 2 mol% to 6 mol%; and
(3) in step S3, the D50 particle size of the obtained cathode material of lithium-ion battery was 4.0 µm, and the chemical formula of the layered lithium metal oxide calculated according to the feed ratio was Li_{1.15}(Ni_{0.5}Co_{0.2}Mn_{0.3})_{0.94}M_{0.06}O_{2.105}.

### Example 3

A cathode material of lithium-ion battery was prepared based on Example 1. The specific steps differed from those in Example 1 in that: in step S2, the pre-sintering was carried out at a temperature of 650°C for 3 h.

### Example 4

A cathode material of lithium-ion battery was prepared based on Example 1. The specific steps differed from those in Example 1 in that: in step S2, the pre-sintering was carried out at a temperature of 350°C for 7 h.

### Example 5

A cathode material of lithium-ion battery was prepared based on Example 1. The specific steps differed from those in Example 1 in that: in step S3, the temperature of the cooling platform was 580°C.

### Example 6

A cathode material of lithium-ion battery was prepared based on Example 1. The specific steps differed from those in Example 1 in that: lanthanum sulfate added in step S1b was replaced with strontium sulfate (CAS No.: 7759-02-6), other conditions unchanged, such that strontium (Sr)-doped Ni_{0.5}Co_{0.2}Mn_{0.3}(OH)₂ grew on the surface, and the molar amount of strontium accounted for 0.5 mol% of the molar amount of the precursor elements (including Ni, Co, Mn and M') obtained in this step.

### Example 7

A cathode material of lithium-ion battery was prepared based on Example 1. The specific steps differed from those in Example 1 in that:
(1) in step S1, the molar ratio of nickel to cobalt to manganese in the metal salt solution was 7:1:2;
(2) in step S3, the mixture was sintered at 800°C for 10 h, and then cooled to 450°C for sintering for 5 h; and
(3) in step S3, the D50 particle size of the obtained cathode material of lithium-ion battery was 4.1 µm. The chemical formula of the layered lithium metal oxide calculated according to the feed ratio was Li_{1.15}(Ni_{0.7}Co_{0.1}Mn_{0.2})_{0.98}M_{0.02}O_{2.085}.

### Example 8

A cathode material of lithium-ion battery was prepared based on Example 1. The specific steps differed from those in Example 1 in that:
(1) in step S1, the molar ratio of nickel to cobalt to manganese in the metal salt solution was 1:1:1;
(2) in step S3, the mixture was sintered at 900°C for 10 h, and then cooled to 450°C for sintering for 5 h;
(3) in step S3, the doping element M was a combination of Zr, Al and W, and the three elements were mixed in a molar ratio of 1:1:1; and
(4) in step S3, the D50 particle size of the obtained cathode material of lithium-ion battery was 3.8 µm. The chemical formula of the layered lithium metal oxide calculated based on the feed ratio was Li_{1.15}(Ni_{1/3}Co_{1/3}Mn_{1/3})_{0.98}M_{0.02}O_{2.085}, wherein in M, the molar ratio of Zr:Al:W was 1:1:1. The cathode material of lithium-ion battery had a double-layer shell structure, wherein the first-layer shell was a perovskite layer comprising La(Ni_{1/3}Co_{1/3}Mn_{1/3})O₃, and the second-layer shell (the outermost layer) was a fast ion conductor layer comprising lithium zirconate, lithium aluminate and lithium tungstate.

### Example 9

A cathode material of lithium-ion battery was prepared based on Example 1. The specific steps differed from those in Example 1 in that:
(1) in step S1, the molar ratio of nickel to cobalt to manganese in the metal salt solution was 8:1:1;
(2) in step S3, the mixture was sintered at 800°C for 9 h, and then cooled to 350°C for sintering for 5 h; and
   in step S3, the doping element M was a combination of Nb and B, and the two elements were mixed in a molar ratio of 1:1; and
(3) in step S3, the D50 particle size of the obtained cathode material of lithium-ion battery was 4.1 µm. The chemical formula of the layered lithium metal oxide calculated based on the feed ratio was Li_{1.15}(Ni_{0.8}Co_{0.1}Mn_{0.1})_{0.98}M_{0.02}O_{2.085}, wherein in M, the molar ratio of Nb:B was 1:1. The cathode material of lithium-ion battery had a double-layer shell structure, wherein the first-layer shell was a perovskite layer comprising La(Ni_{0.8}Co_{0.1}Mn_{0.1})O₃, and the second-layer shell (the outermost layer) was a fast ion conductor layer comprising lithium niobate and lithium borate.

### Comparative Example 1

A cathode material of lithium-ion battery was prepared based on Example 1. The specific steps differed from those in Example 1 in that: lanthanum sulfate used for forming M'-doped NiₓCo_{y}Mn_{z}(OH)₂ was evenly doped into the precursor, i.e., an amount of lanthanum sulfate that was equal to that in Example 1 was added to the metal salt solution in step S1 as a new salt solution to replace the metal salt solution in step S1a and the metal salt solution in step S1b. Therefore, no perovskite layer was formed in the obtained cathode material of lithium-ion battery.

### Comparative Example 2

A cathode material of lithium-ion battery was prepared based on Example 1. The specific steps differed from those from Example 1 in that:
(1) step S2 was not included; and
(2) in step S3, the precursor obtained in S1, the oxide of M and the lithium salt were mixed, and then pre-sintered at 500°C for 5 h, followed by calcination and cooling as described in step S3 of Example 1.

### Comparative Example 3

A cathode material of lithium-ion battery was prepared based on Example 1. The specific steps differed from those in Example 1 in that: in step S3, the cooling platform was not provided, i.e., the sintered product was cooled naturally with furnace .

### Comparative Example 4

A cathode material of lithium-ion battery was prepared based on Example 1. The specific steps differed from those in Example 1 in that:
(1) La was not added in step S1b; and
(2) the chemical formula of the layered lithium metal oxide calculated based on the feed ratio was Li_{1.15}(Ni_{0.5}Co_{0.2}Mn_{0.3})_{0.98}M_{0.02}O_{2.085}; the doping element M was Zr, W and Ti; and the three elements were mixed in a molar ratio of 1:1:1.

### Comparative Example 5

A cathode material of lithium-ion battery was prepared based on Example 1. The specific steps differed from those in Example 1 in that: in step S2, the pre-sintering was carried out at a temperature of 720°C.

### Comparative Example 6

A cathode material of lithium-ion battery was prepared based on Example 1. The specific steps differed from those in Example 1 in that:
(1) La was not added in step S1b; and
(2) in step S3, the doping element M was La, Zr, W and Ti, and the four elements were mixed in a molar ratio of 1.5:2:2:2; the above molar amount of M was adjusted from 2 mol% to 2.5 mol%; and the oxide of La used was La₂O₃.

### Test example

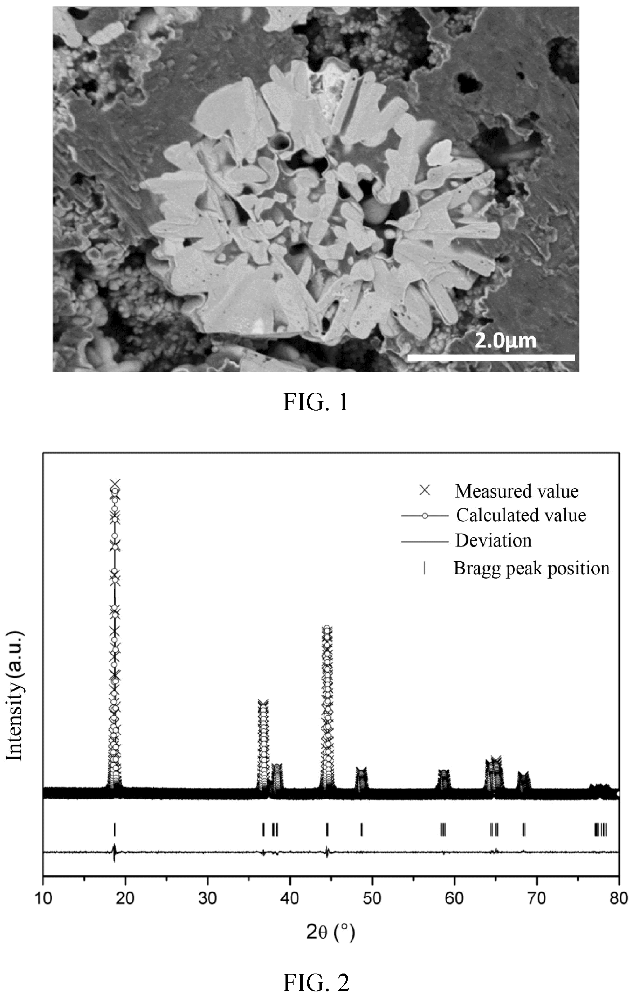

In this example, the cross-sectional morphology of cathode material of lithium-ion battery obtained in each example was tested. The test method was to perform SEM test after sectioning. The test results show that the cathode material of lithium-ion battery obtained in each example of the present disclosure has similar cross-sectional morphology and has a through-hole structure, which is beneficial to improve the electrolyte wettability and rate performance of the cathode material of lithium-ion battery. The cross-sectional morphology of the cathode material of lithium-ion battery obtained in Example 1 is shown in FIG.1.

In this example, the XRD patterns of the cathode materials of lithium-ion batteries obtained in Examples 1-9 and Comparative Examples 1-6 were tested, and the lithium-ion site occupancy and crystallite size were obtained through fine-tuning and calculation. The fine-tuning software was Fullprof. The XRD pattern detection equipment was a Rigaku XRD analyzer from Japan, model Smartlab 3 kW. The crystallite size was read using the built-in function of the XRD analyzer, where the crystallite size was the average value of the crystallite size of the characteristic peaks from 0° to 70°. The test results show that the crystallite sizes of the cathode materials of lithium-ion batteries obtained in examples are between 400 Å and 800 Å, which ensures the integrity and structural stability of the crystals. The XRD test and fine-tuning results of Example 1 are shown in FIG. 2; and the calculated and experimental values in FIG.2 are highly overlapped.

In this example, the oil adsorption of the cathode materials of lithium-ion batteries obtained in Examples 1-9 and Comparative Examples 1-6 was also tested. The specific detection equipment was a HITEC DABS oil adsorption tester. Paraffin oil was dropwise added to each cathode material of lithium-ion battery at a constant speed during the stirring, and the oil adsorption was calculated based on the torque value.

In this example, the particle sizes of the cathode materials of lithium-ion batteries obtained in Examples 1-9 and Comparative Examples 1-6 were also tested, and the Span values were calculated. The particle size was measured using a Malvern laser particle size analyzer. Unless otherwise specified, the particle size in the present disclosure refers to a cumulative volume particle size, such as D₅₀, which is actually D_{V50}. And the Span value = (D90 - D10)/D50 was calculated. The results show that the Span values of the cathode materials of lithium-ion batteries obtained in examples are between 0.4 and 1.4, and more specifically between 0.6 and 0.8. This means that the obtained cathode material of lithium-ion battery has high particle size uniformity.

In this example, the low-temperature impedances and electrochemical performances of the cathode materials of lithium-ion batteries obtained in Examples 1-9 and Comparative Examples 1-6 were also tested. The test steps comprised:

### Preparation of coin battery

The cathode material of lithium-ion battery, a conductive agent Super P, a binder polyvinylidene fluoride (PVDF) in a mass ratio of 90:5:5 were mixed with N-methylpyrrolidone (NMP) and evenly stirred to prepare a cathode slurry (with a solid content of approximately 40%). The cathode slurry was coated onto the current collector aluminum foil, dried at 105°C, rolled at room temperature to obtain an areal density of 2.8 g/cm³-3.3 g/cm³, punched, and cut into round sheets of φ14 mm to prepare the cathode sheets. The coin battery was assembled in a glove box. The button battery was assembled in the following order: anode shell - nickel foam - lithium sheet (φ18 mm) - 8 drops of electrolyte - separator (φ22 mm, a thickness of 16 µm) - 8 drops of electrolyte - cathode sheet - cathode shell. The electrolyte comprised ethylene carbonate (EC), ethyl methyl carbonate (EMC) and dimethyl carbonate (DMC) (with a volume ratio of EC:EMC:DMC=1:1:1), and further comprised 1.0 M LiPF₆. The battery shell (including cathode and anode shells) was 24 mm. The assembled coin battery was placed into the mold slot of a hydraulic sealing machine (purchased from Shenzhen Kejing Zhida Technology Co., Ltd., China), locked in place, applied with a pressure >450 kg/cm², then unlocked, and finally the sealed coin battery was taken out.

### Impedance (DCR) test

At 25°C, the charge-discharge cycling characteristic of the coin battery was tested using a Blue Electric test cabinet. The charge and discharge cycle was performed at a rate of 0.1 C within a voltage range of 2.8 V-4.25 V. Specifically, the coin battery was charged at a constant current of 0.1 C to 4.25 V, then charged at a constant voltage of 4.25 V to the cutoff current of 0.02 C, and rested for 5 min; discharged at 0.1 C to 2.8 V and rested for 5 min; charged at a constant current of 0.1 C to 4.25 V, and then charged at a constant voltage of 4.25 V to the cutoff current of 0.02 C, rested for 5 min; discharged at 0.1 C for 5 h, and then rested for 2 h; then, at -30°C, detected with the low temperature impedance using the blue electric test cabinet; rested at -30°C for 1 h, discharged at 2 C for 10 s and then rested. The DCR value at -30°C was obtained by dividing the voltage difference between the voltage before discharge at 2C and the voltage of discharge for 10 s by the discharge current. Typically, in the ternary cathode material, the impedance value decreases as the proportion of manganese decreases and the proportion of cobalt increases.

### Capacity retention test

At 25°C, the charge-discharge cycling characteristic of the coin battery was tested using a blue electric test cabinet, and 1 C = 163 mAh/g was set. The charge-discharge cycling was performed at a rate of 1 C within a voltage range of 2.8 V-4.25 V. Specifically, the coin battery was charged at a constant current of 1 C to 4.25 V, charged at a constant voltage of 4.25 V to the cutoff current of 0.02 C, rested for 5 min, then discharged at 1 C to 2.8 V, and rested for 5 min. The charge and discharge capacity of the first cycle was recorded. The above steps were repeated. After the charge-discharge cycling was performed for 50 cycles, the charge and discharge capacity of the 50^{th} cycle were recorded. 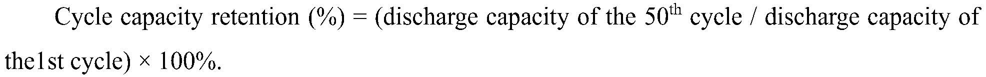 Cycle capacity retention (%) = (discharge capacity of the 50th cycle / discharge capacity of the1st cycle) × 100%.

The results of the above tests are shown in Table 1.

**Table 1 Performance of cathode materials of lithium-ion batteries obtained in Examples 1-9 and Comparative Examples 1-6**

| Example | Impedance value at -30°C (Ω) | Lithium site occupancy (%) | Oil adsorption (mL/100 g) | Capacity retention (%) |
|---|---|---|---|---|
| Example 1 | 320 | 98.2 | 53 | 98.5 |
| Example 2 | 286 | 98.0 | 50 | 99.0 |
| Example 3 | 319 | 98.0 | 52 | 98.8 |
| Example 4 | 327 | 98.1 | 53 | 97.9 |
| Example 5 | 328 | 98.2 | 52 | 97.5 |
| Example 6 | 316 | 98.1 | 53 | 98.4 |
| Example 7 | 291 | 97.5 | 51 | 97.6 |
| Example 8 | 300 | 99.3 | 50 | 98.9 |
| Example 9 | 273 | 97.9 | 52 | 97.0 |
| Comparative Example 1 | 384 | 96.5 | 48 | 96.4 |
| Comparative Example 2 | 358 | 97.0 | 45 | 96.9 |
| Comparative Example 3 | 345 | 97.7 | 50 | 97.0 |
| Comparative Example 4 | 397 | 97.0 | 48 | 96.0 |
| Comparative Example 5 | 336 | 97.8 | 50 | 97.3 |
| Comparative Example 6 | 352 | 97.3 | 46 | 96.6 |

As can be seen from the above results, the cathode material of lithium-ion battery prepared by the method provided in the present disclosure has a relatively low low-temperature impedance value, a relatively high lithium site occupancy, relatively good oil adsorption, and a relatively high capacity retention. It is expected that the lithium-ion secondary battery comprising the cathode material of lithium-ion battery has excellent rate performance and cycle performance in a low-temperature environment, and is expected to be applied to HEVs. Furthermore, the obtained HEVs are expected to be used on a large scale in regions with lower temperatures.

In Comparative Example 1, M' used for forming the perovskite intermediate layer is uniformly doped into the precursor, such that no perovskite layer is formed therein. In Comparative Example 2, lithium is introduced first followed by pre-sintering; due to the presence of lithium salt, the perovskite layer cannot be formed. In Comparative Example 3, no cooling platform is provided, so a complete fast ion conductor layer cannot be formed. In Comparative Example 4, no La is added in step S1b, and thus the perovskite intermediate layer cannot be formed. In Comparative Example 5, the pre-sintering temperature exceeds the range specified herein, resulting in deteriorated crystallinity of the pre-sintered product. In Comparative Example 6, a single coating layer is formed, which contains the fast ion conductor, while partial doping of M occurs in the layered lithium metal oxide. In the foregoing comparative examples, a dual-layer coating structure is not formed, or the crystalline property of the obtained cathode material of lithium-ion battery is degraded, thereby significantly reducing the lithium ion site occupancy and increasing the impedance value under low-temperature conditions.

In summary, the cathode material of lithium-ion battery provided in the present disclosure exhibits synergistic effects among various layers and components; the preparation method provided in the present disclosure demonstrates synergistic effects among step sequence and process parameters, all of which jointly enhance the overall performance of the obtained cathode material of lithium-ion battery.

The embodiments of the present disclosure have been described in detail with reference to the accompanying drawings. However, the present disclosure is not limited to the above embodiments. Within the scope of knowledge possessed by persons of ordinary skill in the art, various changes can be made without departing from the protection of the present disclosure. In addition, unless otherwise specified, the embodiments and features described in the present disclosure shall be combined with each other.

## Claims

1. A cathode material of lithium-ion battery, having a chemical formula of LiₐNiₓCo_{y}Mn_{z}M_{w}O_{2±b}, wherein 1.03≤a≤1.3, 0.3≤x≤1, 0≤y≤0.4, 0≤z≤0.4, 0≤w≤0.1, x+y+z+w=1, and 0≤b≤0.1; and M is at least one selected from the group consisting of La, Al, Ca, Ti, Zr, W, Sr, B, Nb and Ba; and
wherein the cathode material of lithium-ion battery has a double-layer core-shell structure, and comprises, from a center to a surface, a layered lithium metal oxide, a perovskite layer and a fast ion conductor layer; and the perovskite layer comprises a perovskite material and comprises a chemical formula of M'(Ni_{x'}Co_{y'}Mn_{z'})O₃, where 0.3≤x'≤1, 0≤y'≤0.4, 0≤z'≤0.4, x'+y'+z'=1, and M' is at least one selected from the group consisting of La, Sr, Ca and Ti.

2. The cathode material of lithium-ion battery according to claim 1, wherein,
the layered lithium metal oxide has a chemical formula of LiₐNiₓCo_{y}Mn_{z}M_{w}O_{2±b}, where 1.03≤a≤1.3, 0.3≤x≤1, preferably 0.3≤x≤0.8, 0≤y≤0.4, 0≤z≤0.4, 0≤w≤0.1, preferably 0.02≤w≤0.06, x+y+z+w=1, 0≤b≤0.1; and M is at least one selected from the group consisting of Zr, W, Ti, Al, B, Nb, Ba and Ca, preferably at least one selected from the group consisting of Zr, W, Ti, Al, B and Nb;
preferably, 0.3 ≤ x' ≤ 0.8, and M' is at least one selected from the group consisting of La and Sr;
preferably, the fast ion conductor layer comprises a LiMO-type fast ion conductor material, wherein M is at least one selected from the group consisting of Zr, W, Ti, Al, B, Nb, Ba and Ca, preferably at least one selected from the group consisting of Zr, W, Ti, Al, B and Nb.

3. The cathode material of lithium-ion battery according to claim 1 or 2, wherein the cathode material of lithium-ion battery has a pore structure; and at least a portion of the pore structure is a through hole.

4. The cathode material of lithium-ion battery according to claim 1 or 2, wherein,
the cathode material of lithium-ion battery has an oil adsorption of 20-60 mL/100 g;
preferably, the cathode material of lithium-ion battery has a lithium site occupancy of ≥95%, preferably ≥97%; and
preferably, an impedance value of the cathode material of lithium-ion battery at -30°C is ≤330 Ω.

5. A preparation method for a cathode material of lithium-ion battery, comprising the following steps:
S1, depositing M'-doped NiₓCo_{y}Mn_{z}(OH)₂ on a surface of NiₓCo_{y}Mn_{z}(OH)₂ with a co-precipitation method to obtain a precursor;
S2, pre-sintering the precursor in an aerobic atmosphere at a temperature of 300°C-700°C to obtain a pre-sintered product; and
S3, mixing the pre-sintered product obtained in step S2, a lithium source and an M-containing dopant source to obtain a mixture; and calcining the mixture in an aerobic atmosphere, and then cooling to obtain the cathode material of lithium-ion battery,
wherein the calcination is carried out at a temperature of 700°C-1000°C; and
the cooling involves a cooling platform having a temperature of 300°C-600°C.

6. The preparation method according to claim 5, wherein in step S1, when a particle size of the NiₓCo_{y}Mn_{z}(OH)₂ is 90%-99% of a particle size of the precursor, the deposition of the M'-doped NiₓCo_{y}Mn_{z}(OH)₂ is initiated.

7. The preparation method according to claim 5, wherein a molar percentage of the doping element M' added in step S1 accounts for 0.05 mol%-1.5 mol%, preferably 0.5 mol%-1.5 mol%, of elements Ni, Co, Mn and M' in the precursor.

8. The preparation method according to any one of claims 5-7, wherein in step S2, the pre-sintering is carried out for 2 h-8 h.

9. The preparation method according to any one of claims 5 to 7, wherein in step S3, the calcination is carried out for 4 h-24 h; and/or, a cooling duration of the cooling platform is 1 h-7 h.

10. A lithium-ion secondary battery, raw materials for preparing the lithium-ion secondary battery comprising the cathode material of lithium-ion battery according to any one of claims 1-4.
